# EUROPÄISCHE PATENTSCHRIFT

(11) **EP 2 849 965 B1**
(45) Veröffentlichungstag und Bekanntmachung des Hinweises auf die Patenterteilung: **06.04.2016**
(21) Anmeldenummer: 13723465.4
(22) Anmeldetag: 14.05.2013
(51) Int. Cl.: F16B 15/00, F16B 17/00, F16B 5/04, B60N 2/68

(54) **BAUTEILANORDNUNG, FAHRZEUGSITZ UND HERSTELLUNGSVERFAHREN**
ARRANGEMENT OF COMPONENTS, VEHICLE SEAT, AND PRODUCTION METHOD
ARRANGEMENT DE COMPOSANTS, SIÈGE DE VÉHICULE ET PROCÉDÉ DE FABRICATION

(30) Priorität: 14.05.2012 DE 102012009505
(43) Veröffentlichungstag der Anmeldung: 25.03.2015
(73) Patentinhaber: Johnson Controls GmbH, 51399 Burscheid (DE)
(72) Erfinder: WERNER, Hans-Georg, 40764 Langenfeld (DE); GROSS, Bernd, 40764 Langenfeld (DE); DANNHEISIG, Andreas, 48336 Sassenberg (DE)
(74) Vertreter: Loock, Jan Pieter
(86) Internationale Anmeldenummer: PCT/EP2013/059872
(87) Internationale Veröffentlichungsnummer: WO 2013/171180

(56) Entgegenhaltungen:
- EP-A2- 1 253 332
- EP-A2- 2 423 518
- WO-A1-2009/152478
- DE-A1-102009 020 586
- FR-A5- 2 195 285
- GB-A- 2 215 600
- US-A- 3 645 163

## Beschreibung

### Stand der Technik

Die Erfindung geht von einer Bauteilanordnung nach dem Oberbegriff des Anspruchs 1 aus (siehe z.B. die EP 2 423 518 A2).

Solche Bauteilanordnungen sind allgemein bekannt und dienen dazu, verschiedene Bauteile mechanisch belastbar miteinander zu verbinden. Zur Gewichtseinsparung finden bei Fahrzeugen zunehmend Sandwich- und Hybridbauteile Verwendung. Klassische Verbindungstechniken, wie Schweißen und Kleben, scheiden für solche Bauteile aus, insbesondere wenn die Bauteile aus verschiedenen Materialen, wie Aluminium und Stahl, Kunststoff-Stahl, gefertigt sind.

Es ist daher die Aufgabe der vorliegenden Erfindung eine Bauteilanordnung zur Verfügung zu stellen, die eine Verbindung sämtlicher Bauteiltypen ermöglicht und gleichzeitig schnell, einfach und somit kostengünstig herzustellen ist.

Gelöst wird diese Aufgabe durch eine Bauteilanordnung, insbesondere für einen Fahrzeugsitz, aufweisend ein erstes Bauteil und ein zweites Bauteil, wobei das erste Bauteil und das zweite Bauteil mittels eines Verbindungsmittels miteinander verbunden sind, wobei das Verbindungsmittel einen nagelförmigen Stift umfasst, dadurch gekennzeichnet, dass das erste Bauteil ein plattenförmiges Element ist, wobei das zweite Bauteil ein Strukturbauteil ist, dadurch gekennzeichnet, dass die Bauteilanordnung ferner eine Laschenverbindung aufweist, wobei die Laschenverbindung eine aus dem ersten Bauteil ausgestanzte und aus der Ebene des plattenförmigen Elementes herausgebogene Lasche umfasst, welche dazu ausgebildet ist, durch eine Öffnung im zweiten Bauteil gesteckt und umgebogen zu werden.

In vorteilhafter Weise wird mittels des nagelförmigen Stiftes eine mechanisch stabile Verbindung zwischen dem ersten und dem zweiten Bauteil erzeugt. Diese Verbindung kann beispielsweise dadurch erzeugt werden, dass der Stift durch das erste und das zweite Bauteil getrieben wird. Vorteilhafterweise wird somit keine klebe Verbindung, Schweißverbindung, oder mit Verbindung zwischen dem ersten und dem zweiten Bauteil benötigt. Mittels des Stifters lassen sich daher auch Hybridnauteile oder Sandwichbauteile miteinander verbinden. Denkbar ist auch, dass das erste Bauteil und/oder das zweite Bauteil jeweils aus mehreren plattenförmigen und voneinander beanstandeten Elementen bestehen. Gemäß einer bevorzugten Ausführungsform der vorliegenden Erfindung umfasst der Stift einen Kerbnagel. Mittels eines Kerbnagels ist sowohl eine formschlüssige als auch eine kraftschlüssige Verbindung zwischen dem ersten Bauteil und dem zweiten Bauteil realisierbar. Es wird somit eine mechanisch stabile Verbindung erzielt. Zudem ist ein Kerbnagel vergleichsweise kostengünstig, so dass die Herstellungskosten der Bauteilanordnung im Vergleich zum Stand der Technik reduziert werden können. Ein Fachmann versteht natürlich von selbst, dass neben der Verbindung zwischen dem ersten Bauteil und dem zweiten Bauteil mittels des Kerbnagels, noch weitere andere Verbindungen, basierend beispielsweise auf stoffschlüssigen, kraftschlüssigen und/oder formschlüssigen Verbindungstechniken, zwischen dem ersten und dem zweiten Bauteil existieren können. Denkbar ist, dass der Kerbnagel zur abschließenden Verbindung des ersten Bauteils mit dem zweiten Bauteil dient oder dass der Kerbnagel nur solange zur Vorfixierung des ersten Bauteils am zweiten Bauteil dient, bis in einer Endmontage das erste und zweiten Bauteil durch weitere hochfeste Verbindungen abschließend miteinander verbunden werden

Gemäß einer bevorzugten Ausführungsform der vorliegenden Erfindung ist vorgesehen, dass das erste Bauteil eine erste Öffnung und das zweite Bauteil eine zweite Öffnung aufweisen, wobei die erste Öffnung und die zweite Öffnung im Wesentlichen deckungsgleich angeordnet sind und wobei sich der Kerbnagel durch die erste und die zweite Öffnung erstreckt. In vorteilhafter Weise sorgt das Einbringen einer ersten Öffnung in das erste Bauteil an einer zweiten Öffnung in das zweite Bauteil dafür, dass beim Eintreiben des Kerbnagels das erste und zweite Bauteil nicht oder nur geringförmig deformiert werden. Ferner kann auf diese Weise sichergestellt werden, dass ein Zwischenmaterial, welches zwischen zwei plattenförmigen Elementen angeordnet ist, durch das Einbringen des Kerbnagels nicht beschädigt wird. Dies ist insbesondere bei Sandwichbauteilen vorteilhaft. Der Kerbnagel wird insbesondere derart eingebracht, dass der Kerbnagel form- und kraftschlüssig in der ersten Öffnung, als auch form- und kraftschlüssig in der zweiten Öffnung angeordnet ist. Die Durchmesser der ersten und/oder zweiten Öffnung sind hierfür vorzugsweise etwas geringer als der Durchmesser des Kerbnagels. Der Kerbnagels wird dann durch die Wanderungen der Öffnungen eingeklemmt.

Gemäß einer weiteren bevorzugten Ausführungsform der vorliegenden Erfindung ist vorgesehen, dass der Stift wenigstens eine Nut und/oder Rippe auf seiner äußeren Mantelfläche aufweist, wobei die wenigstens eine Nut und/oder Rippe sich vorzugsweise entlang einer axialen Richtung des Stiftes erstrecken oder sich im Wesentlichen senkrecht zur axialen Richtung in Umfangsrichtung des Stiftes erstrecken. Die Nut und/oder Rippe sorgen vorteilhafter Weise dafür, dass die Festigkeit der Verbindung zwischen dem ersten und dem zweiten Bauteil gesteigert wird. Der Kerbnagel umfasst vorzugsweise einen zylinderförmigen Schaft, wobei ein erstes Ende des Schaftes eine verjüngte Spitze aufweist und wobei ein zweites Ende des Schaftes eine Abplattung aufweist. Durch einen auf die Abplattung ausgeübten Kraftstoß wird der Kerbnagel in das erste und zweite Bauteil eingetrieben. Denkbar ist, dass sowohl das erste Bauteil, als auch das zweite Bauteil, von dem Kerbnagel komplett durchstoßen werden oder dass nur eines der beiden Bauteile von dem Kerbnagel komplett durchstoßen werden während der Kerbnagel in das andere Bauteil nur teilweise eindringt.

Gemäß einer bevorzugten Ausführungsform ist vorgesehen, dass das erste Bauteil und das zweite Bauteil aus einem unterschiedlichen Material gefertigt sind und/oder eine unterschiedliche Dicke parallel zur axialen Richtung aufweisen. In vorteilhafter Weise können mit dem Kerbnagel unterschiedlichste Bauteile miteinander verbunden werden, unabhängig von dem jeweiligen Materialien oder Geometrien.

Ein weiterer Gegenstand der vorliegenden Erfindung ist ein Fahrzeugsitz für ein Kraftfahrzeug aufweisend ein Strukturbauteil und ein plattenförmiges Element, wobei das Strukturbauteil und das Element eine erfindungsgemäße Bauteilanordnung umfasst. Denkbar ist beispielsweise, dass das erste Bauteil als tragendes Strukturbauteil und das zweite Bauteil als plattenförmiges Element fungieren, wobei das Strukturbauteil und das plattenförmige Element mittels des Kerbnagels miteinander verbunden werden. Für das Strukturbauteil, welches vergleichsweise hohen Belastungen standhalten können muss, kann dann beispielsweise Stahl verwendet werden, während für das plattenförmige Element, welche beispielsweise eine Verkleidungsplatte umfasst, ein Kunststoff-, Composite- oder ein Aluminiummaterial verwendet werden kann. Der Fahrzeugschutz kann somit gewichtsoptimiert werden. Ein leichterer Fahrzeugsitz senkt zudem den Kraftstoffverbrauch des Fahrzeugs.

Ein weiterer Gegenstand der vorliegenden Erfindung ist ein Verfahren zur Herstellung einer erfindungsgemäßen Bauteilanordnung, wobei in einem ersten Schritt das erste Bauteil und das zweite Bauteil bereitgestellt werden und wobei in einem zweiten Schritt das erste Bauteil und das zweite Bauteil miteinander verbunden werden, wobei im zweiten Schritt zur Verbindung des ersten und des zweiten Bauteils der nagelförmigen Stift durch das erste und das zweite Bauteil getrieben dadurch gekennzeichnet, dass zur Herstellung einer weiteren Verbindung in Form einer Laschenverbindung aus dem ersten Bauteil, welches ein plattenförmiges Bauteil ist, eine Lasche ausgestanzt und aus der Ebene des plattenförmigen Elementes herausgebogen wird, wobei die Lasche durch eine Öffnung im zweiten Bauteil, welches ein Strukturbauteil ist, gesteckt und umgebogen wird.

Das vorliegende Verfahren zur Herstellung einer Bauteilanordnung ist im Vergleich zum Stand der Technik wesentlich einfacher, und somit kostengünstiger durchführbar. Ein weiterer Vorteil des Verfahrens ist, dass die Verbindung von einer Montageseite aus hergestellt werden kann. Hierdurch wird der Montageaufwand weiter reduziert.

Gemäß einer bevorzugten Weiterbildung des vorliegenden Verfahrens ist vorgesehen, dass im ersten Schritt das erste und das zweite Bauteil miteinander in Anlage gebracht werden und/oder dass im ersten Schritt das erste und/oder zweite Bauteil vorgebohrt werden. Der Kerbnagel lässt sich somit leichter in das Material eintreiben und eine Beschädigung des Materials wird weitgehend vermieden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Schnittbildansicht einer Bauteilanordnung gemäß einer beispielhaften Ausführungsform der vorliegenden Erfindung.
- **Figur 2**: zeigt eine schematische Teilansicht eines Fahrzeugsitzes aufweisend einer Bauteilanordnung gemäß der beispielhaften Ausführungsform der vorliegenden Erfindung.
- **Figuren 3a, 3b, 3c**: zeigen schematische Detailansichten einer mit weiteren Verbindungen ausgestatteten Bauteilanordnung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

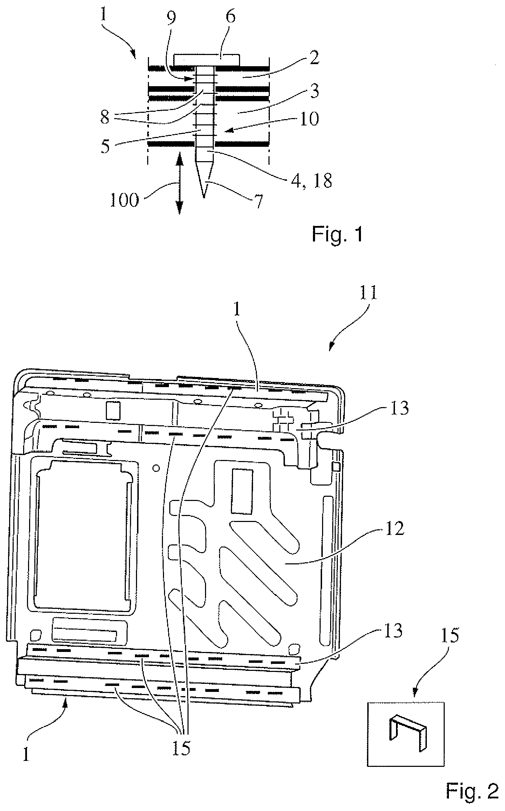

In **Figur 1** ist eine schematische Schnittbildansicht einer Bauteilanordnung 1 gemäß einer beispielhaften Ausführungsform der vorliegenden Erfindung illustriert. Die Bauteilanordnung 1 umfasst ein erstes Bauteil 2 und ein zweites Bauteil 3. Das erste und zweite Bauteil 2, 3 sind im vorliegenden Beispiel Teile eines Fahrzeugsitzes 11 eines Kraftfahrzeugs (teilweise gezeigt in Figur 2). Das erste Bauteil 2 befindet sich in Anlage mit dem zweiten Bauteil 3. Das erste und zweite Bauteil 2, 3 sind über ein Verbindungsmittel in Form eines Kerbnagels 4 fest miteinander verbunden. Der Kerbnagel 4 umfasst einen als Hohlzylinder ausgebildeten Schaft 5, dessen eines Ende mit einer Abplattung 6 versehen ist und dessen anderes Ende mit einer sich verjüngten Spitze 7 versehen ist. Im Schaftbereich weist der Kerbnagel 4 eine Vielzahl von Rillen und Nuten 8 auf, welche sich senkrecht zu einer axialen Richtung 100 des Kerbnagels 4 und somit entlang einer Umfangsrichtung des Kerbnagels 4 erstrecken. Das erste Bauteil 2 weist im Bereich des Kerbnagels 4 eine erste Öffnung 9 auf, während das zweite Bauteil 3 im Bereich des Kerbnagels 4 eine zweite Öffnung 10 aufweist. Die erste und zweite Öffnung 9, 10 haben einen geringfügig kleineren Durchmesser, als der Schaftbereich. Zur Herstellung der Verbindung zwischen dem ersten und dem zweiten Bauteil 2, 3 wird der Kerbnagel 4 mit seiner Spitze 7 voran durch die erste und die zweite Öffnung 9, 10 getrieben. Hierfür wird auf die Abplattung 6 eine Kraft in axialer Richtung 100 ausgeübt. Die Rillen und Nuten 8 verkeilen im Material des ersten und des zweiten Bauteils 2, 3, so dass eine formschlüssige und kraftschlüssige Verbindung zwischen dem ersten Bauteil 2 und dem Kerbnagel 4, sowie zwischen dem zweiten Bauteil 3 und dem Kerbnagel 4 erzeugt wird. Denkbar ist, dass das erste Bauteil 2 und das zweite Bauteil 3 aus unterschiedlichen Materialien gefertigt sind. Beispielsweise umfasst eines der beiden Bauteile 2, 3 ein Stahlbauteilen während das andere Bauteil 2, 3 aus Aluminium, Kunststoff oder einem Composite-Aufbau gefertigt ist. Alternativ könnten beide Bauteile 2, 3 oder eines der beiden Bauteile 2, 3 ein Sandwich-Bauteil umfassen. Denkbar ist auch das mittels des einen Kerbnagels 4 weitere Bauteile am ersten und zweiten Bauteil 2, 3 befestigt werden.

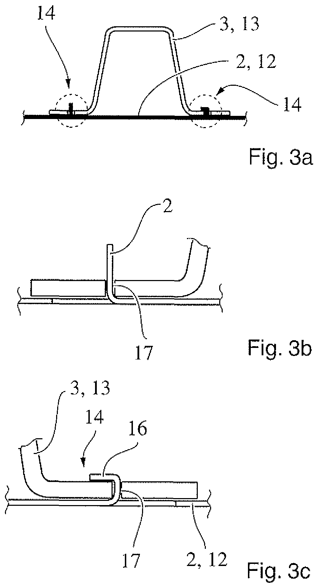

In **Figur 2** ist eine schematische Teilansicht eines Fahrzeugsitzes 11 aufweisend eine Bauteilanordnung 1 gemäß der beispielhaften Ausführungsform der vorliegenden Erfindung dargestellt. Der Fahrzeugsitz 11 umfasst ein plattenförmliches Element 12, welches als Grundplatte für die Rückenlehne des Fahrzeugbesitzers 11 fungiert, und zweier Strukturbauteile 13, welche als Verstärkungstreben für die Grundplatte fungieren. Die Strukturbauteile 13 und das Element 12 bilden zusammen ein Hybridbauteil. Die Strukturbauteile 13 sind an dem Element 12 über eine Mehrzahl von Kerbnägeln 4 gemäß der in Figur 1 gezeigten Bauteilanordnung 1 befestigt. Denkbar ist, dass die Kerbnägel 4 zur abschließenden Befestigung der Strukturbauteile 13 an dem Element 12 dienen oder dass die Kerbnägel 4 nur zur Vormontage der Strukturbauteile 13 an dem Element 12 solange dienen, bis die Strukturbauteile 13 durch weitere hochfeste Verbindungen mit dem Element 12 verbunden werden.
Zusätzlich sind die Strukturbauteile 13 beispielsweise über Tackerklammern 15 an der Grundplatte befestigt. Eine solche Tackerklammer 15 ist zur Veranschaulichung noch in einer kleinen Detaildarstellung schematisch illustriert, wobei die Klammer 15 vorzugsweise aus Edelstahl gefertigt ist, um eine hochfeste Verbindung zu erhalten. Denkbar ist auch, dass die Strukturbauteile 13 ferner mit dem Element 12 verklebt sind. Gemäß einer weiteren Ausführungsform sind die Strukturbauteile 13 mit dem Element 12 ferner durch eine Laschenverbindung 14 verbunden. Das Prinzip der Laschenverbindung 14 wird nachfolgend anhand der Figuren 3a, 3b und 3c erklärt.

In **Figuren 3a, 3b, 3c** sind schematische Detailansichten einer mit weiteren Verbindungen ausgestatteten Bauteilanordnung 1 gemäß der beispielhaften Ausführungsform der vorliegenden Erfindung dargestellt. Die Laschenverbindung 14 wird dadurch hergestellt, dass aus dem ersten Bauteil 2, hier das plattenförmige Element 12, eine Lasche 16 ausgestanzt und aus der Ebene des Elements 12 herausgebogen wird. Diese Lasche 16 wird anschließend durch eine Öffnung 17 im zweiten Bauteil 3, hier ein Strukturbauteil 13, gesteckt (siehe Figur 3b) und anschließend umgebogen (siehe Figur 3c). Auf diese Weise wird eine formschlüssige und/oder kraftschlüssige Verbindung zwischen dem ersten und dem zweiten Bauteil 2, 3 in Form einer weiteren Verbindung 14 erzielt.

### Bezugszeichenliste

- 1: Bauteilanordnung
- 2: Erstes Bauteil
- 3: Zweites Bauteil
- 4: Kerbnagel
- 5: Schaft
- 6: Abplattung
- 7: Spitze
- 8: Rillen, Nuten
- 9: Erste Öffnung
- 10: Zweite Öffnung
- 11: Fahrzeugsitz
- 12: Plattenförmliches Element
- 13: Strukturbauteil
- 14: Laschenverbindung
- 15: Tackerklammer
- 16: Lasche
- 17: Öffnung
- 18: Stift
- 100: Axiale Richtung

## Patentansprüche

1. Bauteilanordnung (1 ), insbesondere für einen Fahrzeugsitz (11), aufweisend ein erstes Bauteil (2) und ein zweites Bauteil (3), wobei das erste Bauteil (2) und das zweite Bauteil (3) mittels eines Verbindungsmittels miteinander verbunden sind, wobei das Verbindungsmittel einen nagelförmig ausgebildeten Stift (18) umfasst, **dadurch gekennzeichnet, dass** das erste Bauteil (2) ein plattenförmiges Element (12) und das zweite Bauteil (3) ein Strukturbauteil (13) ist, wobei die Bauteilanordnung (1) ferner eine Laschenverbindung (14) aufweist, wobei die Laschenverbindung (14) eine aus dem ersten Bauteil (2) ausgestanzte und aus der Ebene des plattenförmigen Elements (12) herausgebogene Lasche (16) umfasst, welche dazu ausgebildet ist, durch eine Öffnung (17) im zweiten Bauteil (3) gesteckt und umgebogen zu werden.

2. Bauteilanordnung (1) nach Anspruch 1, wobei der Stift (18) einen Kerbnagel (4) umfasst.

3. Bauteilanordnung (1) nach Anspruch 2, wobei das erste Bauteil (2) eine erste Öffnung (9) und das zweite Bauteil (3) eine zweite Öffnung (10) aufweisen, wobei die erste Öffnung (9) und die zweite Öffnung (10) im Wesentlichen deckungsgleich angeordnet sind und wobei sich der Kerbnagel (4) durch die erste und die zweite Öffnung (9, 10) erstreckt.

4. Bauteilanordnung (1 ) nach Anspruch 3, wobei der Kerbnagel (4) formschlüssig und kraftschlüssig in der ersten Öffnung (9), als auch formschlüssig und kraftschlüssig in der zweiten Öffnung (10) angeordnet ist.

5. Bauteilanordnung (1) nach einem der vorhergehenden Ansprüche, wobei der Stift (18) wenigstens eine Nut und/oder Rippe (8) auf seiner äußeren Mantelfläche aufweist, wobei die wenigstens eine Nut und/oder Rippe (8) sich vorzugsweise entlang einer axialen Richtung (100) des Stiftes (18) erstrecken oder sich im Wesentlichen senkrecht zur axialen Richtung (100) in Umfangsrichtung des Stiftes (18) erstrecken.

6. Bauteilanordnung (1) nach einem der vorhergehenden Ansprüche, wobei das erste Bauteil (2) und das zweite Bauteil (3) aus einem unterschiedlichen Material gefertigt sind und/oder eine unterschiedliche Dicke parallel zur axialen Richtung (100) aufweisen.

7. Bauteilanordnung (1) nach einem der vorhergehenden Ansprüche, wobei das erste Bauteil (2) und/oder das zweite Bauteil (3) jeweils ein Sandwichbauteil umfassen.

8. Fahrzeugsitz (11) für ein Kraftfahrzeug aufweisend ein Strukturbauteil (13) und ein plattenförmiges Element (12), wobei das Strukturbauteil (13) und das Element (12) eine Bauteilanordnung (1) nach einem der vorhergehenden Ansprüche umfasst.

9. Verfahren zur Herstellung einer Bauteilanordnung (1) nach einem der Ansprüche 1 bis 7, wobei in einem ersten Schritt das erste Bauteil (2) und das zweite Bauteil (3) bereitgestellt werden und wobei in einem zweiten Schritt das erste Bauteil (2) und das zweite Bauteil (3) miteinander verbunden werden, wobei im zweiten Schritt zur Verbindung des ersten und des zweiten Bauteils (2, 3) der nagelförmige Stift (18) zumindest teilweise durch das erste und das zweite Bauteil (2, 3) getrieben werden, **dadurch gekennzeichnet**, das zur Herstellung einer weiteren Verbindung in Form einer Laschenverbindung (14) aus dem ersten Bauteil (2), welches ein plattenförmiges Element (12) ist, eine Lasche (16) ausgestanzt und aus der Ebene des plattenförmiges Elements (12) herausgebogen wird, wobei die Lasche (16) durch eine Öffnung (17) im zweiten Bauteil (3), welches ein Strukturbauteil (13) ist, gesteckt und umgebogen wird.

10. Verfahren nach Anspruch 9, wobei im ersten Schritt das erste und das zweite Bauteil (2, 3) miteinander in Anlage gebracht werden und/oder dass im ersten Schritt das erste und/oder zweite Bauteil (2, 3) vorgebohrt werden.

## Claims

1. Arrangement of components (1), in particular for a vehicle seat (11), comprising a first component (2) and a second component (3), wherein the first component (2) and the second component (3) are connected together by means of a connection means, wherein the connection means comprises a pin (18) of nail-shaped configuration, **characterized in that** the first component (2) is a plate-shaped element (12) and the second component (3) is a structural component (13), wherein the arrangement of components (1) furthermore has a tab connection (14), wherein the tab connection (14) comprises a tab (16) stamped out of the first component (2) and bent back from the plane of the plate-shaped element (12), which tab (16) is configured to be inserted through an opening (17) in the second component (3) and bent back.

2. Arrangement of components (1) according to Claim 1, wherein the pin (18) comprises a grooved drive stud (4).

3. Arrangement of components (1) according to Claim 2, wherein the first component (2) comprises a first opening (9) and the second component (3) comprises a second opening (10), wherein the first opening (9) and the second opening (10) are arranged so as to be substantially congruent and wherein the grooved drive stud (4) extends through the first and second openings (9, 10).

4. Arrangement of components (1) according to Claim 3, wherein the grooved drive stud (4) is arranged positively and non-positively in the first opening (9) and positively and non-positively in the second opening (10).

5. Arrangement of components (1) according to one of the preceding claims, wherein the pin (18) comprises at least one groove and/or rib (8) on its outer peripheral surface, wherein the at least one groove and/or rib (8) preferably extends in an axial direction (100) of the pin (18) or substantially perpendicularly to the axial direction (100) in the peripheral direction of the pin (18).

6. Arrangement of components (1) according to one of the preceding claims, wherein the first component (2) and the second component (3) are made from a different material and/or have a different thickness parallel to the axial direction (100).

7. Arrangement of components (1) according to one of the preceding claims, wherein the first component (2) and/or the second component (3) in each case comprise a sandwich component.

8. Vehicle seat (11) for a motor vehicle comprising a structural component (13) and a plate-shaped element (12), wherein the structural component (13) and the element (12) comprise an arrangement of components (1) according to one of the preceding claims.

9. Method for producing an arrangement of components (1) according to one of Claims 1 to 7, wherein in a first step the first component (2) and the second component (3) are provided and wherein in a second step the first component (2) and the second component (3) are connected together, wherein in the second step for connecting the first and second components (2, 3) the nail-shaped pin (18) is driven at least partially through the first and second components (2, 3), **characterized in that** for producing a further connection in the form of a tab connection (14), a tab (16) is stamped out of the first component (2), which is a plate-shaped element (12), and is bent back from the plane of the plate-shaped element (12), wherein the tab (16) is inserted through an opening (17) in the second component (3), which is a structural component (13), and bent back.

10. The method according to Claim 9, wherein in the first step the first and second components (2, 3) are brought to bear against one another and/or in that in the first step the first and/or second components (2, 3) are predrilled.

## Revendications

1. Arrangement de composants (1), en particulier pour un siège de véhicule (11), présentant un premier composant (2) et un deuxième composant (3), dans lequel le premier composant (2) et le deuxième composant (3) sont assemblés l'un à l'autre au moyen d'un moyen d'assemblage, dans lequel le moyen d'assemblage comprend une tige (18) réalisée en forme de clou, **caractérisé en ce que** le premier composant (2) est un élément en forme de plaque (12) et le deuxième composant (3) est une pièce de structure (13), dans lequel l'arrangement de composants (1) présente en outre un assemblage à bride (14), dans lequel l'assemblage à bride (14) comprend une bride (16) découpée hors du premier composant (2) et courbée hors du plan de l'élément en forme de plaque (12), qui est configurée pour être engagée à travers une ouverture (17) dans le deuxième composant (3) et être recourbée.

2. Arrangement de composants (1) selon la revendication 1, dans lequel la tige (18) comprend un clou cannelé (4).

3. Arrangement de composants (1) selon la revendication 2, dans lequel le premier composant (2) présente une première ouverture (9) et le deuxième composant (3) présente une deuxième ouverture (10), dans lequel la première ouverture (9) et la deuxième ouverture (10) sont disposées sensiblement en recouvrement total et dans lequel le clou cannelé (4) s'étend à travers la première et la deuxième ouvertures (9, 10).

4. Arrangement de composants (1) selon la revendication 3, dans lequel le clou cannelé (4) est arrangé par emboîtement et par adhérence dans la première ouverture (9) et aussi arrangé par emboîtement et par adhérence dans la deuxième ouverture (10).

5. Arrangement de composants (1) selon l'une quelconque des revendications précédentes, dans lequel la tige (18) présente au moins une rainure et/ou nervure (8) sur sa surface latérale extérieure, dans lequel ladite au moins une rainure et/ou nervure (8) s'étend de préférence le long d'une direction axiale (100) de la tige (18) ou s'étend dans la direction périphérique de la tige (18), essentiellement perpendiculairement à la direction axiale (100).

6. Arrangement de composants (1) selon l'une quelconque des revendications précédentes, dans lequel le premier composant (2) et le deuxième composant (3) sont fabriqués en un matériau différent et/ou présentent une épaisseur différente parallèlement à la direction axiale (100).

7. Arrangement de composants (1) selon l'une quelconque des revendications précédentes, dans lequel le premier composant (2) et/ou le deuxième composant (3) comprennent chacun un composant stratifié.

8. Siège de véhicule (11) pour un véhicule à moteur, présentant une pièce de structure (13) et un élément en forme de plaque (12), dans lequel le composant de structure (13) et l'élément (12) comprennent un arrangement de composants (1) selon l'une quelconque des revendications précédentes.

9. Procédé de fabrication d'un arrangement de composants (1) selon l'une quelconque des revendications 1 à 7, dans lequel on prépare dans une première étape le premier composant (2) et le deuxième composant (3) et dans lequel on assemble l'un à l'autre dans une deuxième étape le premier composant (2) et le deuxième composant (3), dans lequel on enfonce dans la deuxième étape, pour assembler le premier et le deuxiène composants (2, 3), la tige (18) en forme de clou au moins partiellement à travers le premier et le deuxième composants (2, 3), **caractérisé en ce que**, pour la réalisation d'un assemblage supplémentaire sous la forme d'un assemblage à bride (14), on découpe une bride (16) hors du premier composant (2), qui est un élément en forme de plaque (12), et on la courbe hors du plan de l'élément en forme de plaque (12), dans lequel on engage la bride (16) à travers une ouverture (17) dans le deuxième composant (3), qui est une pièce de structure (13), et on la recourbe.

10. Procédé selon la revendication 9, dans lequel, dans la première étape, on applique le premier et le deuxième composants (2, 3) en appui l'un sur l'autre et/ou dans la première étape on perce un avant-trou dans le premier et/ou le deuxième composant (2, 3).
